# EUROPÄISCHE PATENTSCHRIFT

(11) **EP 3 624 455 B1**
(45) Veröffentlichungstag und Bekanntmachung des Hinweises auf die Patenterteilung: **16.04.2025**
(21) Anmeldenummer: 19196982.3
(22) Anmeldetag: 12.09.2019
(51) Int. Cl.: H04N 19/593, H04N 19/182

(54) **VERFAHREN, COMPUTERPROGRAMMPRODUKT UND SPEICHERMEDIUM ZUR KOMPRESSION VON BILDDATEN**
METHOD, COMPUTER PROGRAM PRODUCT AND STORAGE MEDIUM FOR COMPRESSING IMAGE DATA
PROCÉDÉ, PRODUIT DE PROGRAMME INFORMATIQUE ET SUPPORT D'ENREGISTREMENT POUR LA COMPRESSION DE DONNÉES D'IMAGE

(30) Priorität: 12.09.2018 DE 102018122295
(43) Veröffentlichungstag der Anmeldung: 18.03.2020
(73) Patentinhaber: Arnold & Richter Cine Technik GmbH & Co. Betriebs KG, 80807 München (DE)
(72) Erfinder: BAUER, Florian, 80939 München (DE); ABRAHAM, Kevin, 81245 München (DE); GEISSLER, Peter, 81379 München (DE)
(74) Vertreter: Manitz Finsterwald Patent- und Rechtsanwaltspartnerschaft mbB

(56) Entgegenhaltungen:
- US-A- 5 764 374
- US-B1- 6 744 929

## Beschreibung

Die Erfindung betrifft ein Verfahren zur Kompression von Bilddaten, die eine Vielzahl von Pixelwerten umfassen, die einem jeweiligen Pixel zugeordnet sind.

Derartige Bilddaten werden typischerweise in einer elektronischen Kamera, insbesondere einer digitalen Bewegtbildkamera, mittels eines Bildsensors erzeugt. Der Bildsensor umfasst üblicherweise eine Vielzahl von lichtempfindlichen Sensorelementen, die in Zeilen und Spalten angeordnet sind und einem jeweiligen Pixel (Bildpunkt) entsprechen. Die Sensorelemente erzeugen in Abhängigkeit von dem einfallenden Licht elektrische Signale, die einem jeweiligen Helligkeitswert entsprechen. Die Sensorelemente können mit einem Muster von Farbfiltern versehen sein, so dass jeder Helligkeitswert einem Farbkanal zugeordnet ist, insbesondere Rot, Grün und Blau. Hierfür ist das so genannte Bayer-Muster bekannt, bei dem in einer regelmäßigen Anordnung jeweils ein Rot-Filterelement, zwei Grün-Filterelemente und ein Blau-Filterelement vorgesehen sind. Es kommen grundsätzlich aber auch monochrome Bildsensoren sowie Bildsensoren mit unterschiedlich ausgebildeten Pixeln in Betracht, insbesondere Sensoren mit mehreren Farbkanälen, z.B. RGB-W- oder RGB-IR-Sensoren.

Mit zunehmender Ortsauflösung, d.h. mit zunehmender Anzahl von Pixeln je Bild ist das Volumen der Bilddaten bei modernen Kameras erheblich angestiegen. Es gelangen deshalb Kompressionsverfahren zur Anwendung, um die in der Kamera erzeugten Bilddaten zu komprimieren und in komprimierter Form in einen Speicher der Kamera zu schreiben oder an einen externen Speicher auszugeben. Die komprimierten Bilddaten können später wieder dekomprimiert werden. Hierfür sind verlustfreie und verlustbehaftete Kompressionsverfahren bekannt. Eine Bilddatenkompression beruht wie jede Anwendung der Datenkompression darauf, die ursprünglichen Daten, d.h. die Pixelwerte entweder in eine vollständig rekonstruierbare Form zu überführen, die weniger Speicherplatz benötigt (verlustfrei) oder in eine teilweise rekonstruierbare Form zu überführen, die zwar ebenfalls wenig Speicherplatz benötigt, aber nicht alle Daten enthält (verlustbehaftet). Bei der verlustbehafteten Kompression werden also Daten entfernt, deren Verlust allerdings kaum wahrnehmbar sein soll. Eine Bilddatenkompression kann insbesondere ein Prädiktionsverfahren sowie eine Entropiekodierung umfassen. Zusätzlich können Vorverarbeitungsschritte vorgesehen sein, die insbesondere verlustbehaftet sein können und somit insgesamt für eine verlustbehaftete Kompression sorgen (auch wenn die genannte Kombination des Prädiktionsverfahrens und der Entropiekodierung verlustfrei sind).

Beispielsweise ist ein Verfahren zur Kompression von Bilddaten aus US 6 744 929 B1 bekannt. Dabei wird ein vorhergesagter Pixelwert eines Pixels anhand einer zuvor aus mehreren vorbestimmten Formeln ausgewählten optimalen Formel ermittelt und es wird eine Differenz zwischen dem vorhergesagten Pixelwert und dem tatsächlichen Pixelwert gebildet, welche mittels einer Entropiekodierung kodiert wird. US 5 764 374 A beschreibt ein weiteres Verfahren zur Bildkompression, wobei eine Golomb Kodierung eines Vorhersagefehlers vorgesehen ist.

Ferner ist es bekannt, die Bilddaten in den Frequenzraum zu transformieren (z.B. durch Diskrete Cosinus-Transformation gemäß JPEG oder mit Hilfe von Wavelets gemäß JPEG 2000), wobei die Repräsentierung im Frequenzraum durch Koeffizienten erfolgt, die jeweils die Amplitude von bestimmten Frequenzen beschreiben. Um die Daten zu komprimieren, werden diese Koeffizienten frequenzabhängig quantisiert, wobei die den hohen Frequenzen entsprechenden Koeffizienten ungenau übertragen oder verworfen werden. Hierdurch werden feine und hochfrequente Strukturen im Bild entfernt. Derartig komprimierte Bilder haben daher oftmals einen sehr glatten, verwaschenen und leicht unscharfen Bildeindruck. Die bei der Kompression entstehenden Bildfehler sind schlecht vorhersagbar und beschränken sich zudem nicht auf einzelne Pixel, sondern treten als zusätzliche Strukturen (so genannte Artefakte) auf. Außerdem ist die Transformation in den Frequenzraum mit hohem Rechenaufwand verbunden, so dass schnelle Implementierungen, wie sie beispielsweise für Bewegtbildkameras erforderlich sind, mit einem entsprechend hohen technischen Aufwand verbunden sind.

Es ist eine Aufgabe der Erfindung, ein schnelleres Kompressionsverfahren zu schaffen, das bei hohem Kompressionsfaktor eine gute Qualität der dekomprimierten Bilder erreicht und die Ausbildung von Artefakten vermeidet. Vorzugsweise soll das Kompressionsverfahren auch verlustfrei sein.

Diese Aufgabe wird durch ein Verfahren mit den Merkmalen des Anspruchs 1 gelöst.

Das nachfolgend beschriebene Verfahren ist zur Kompression von Bilddaten geeignet, die eine Vielzahl von Pixelwerten umfassen, welche einem jeweiligen Pixel einer Vielzahl von Pixeln zugeordnet sind. Die Pixel sind hierbei in einer Anordnung von Zeilen und Spalten vorgesehen, wobei jede Zeile oder Spalte einer Pixelreihe mit einer vorbestimmten Reihenfolge von Pixeln entspricht. Eine Pixelreihe kann als eine lineare Pixelgruppe bezeichnet werden, d.h. als eine (lineare) Anordnung von Pixeln entlang einer Linie ("alignment"). Moderne digitale Bildsensoren weisen üblicherweise Pixel in einer Anordnung von Zeilen und Spalten auf. Die durch das hier beschriebene Verfahren zu komprimierenden Bilddaten können somit insbesondere durch einen modernen Bildsensor erzeugt werden.

Das Verfahren sieht vor, dass für zumindest einige Pixel die Pixelwerte gemäß den folgenden Schritten komprimiert werden:
- Zuordnen des betreffenden Pixels zu einer von mehreren Pixelgruppen gemäß einem vorbestimmten Gruppierungsschema, wobei jede der mehreren Pixelgruppen durch die Pixel mehrerer vorbestimmter Pixelreihen oder durch eine Untermenge von Pixeln von mehreren vorbestimmten Pixelreihen definiert ist;
- Ermitteln eines geschätzten Pixelwerts des betreffenden Pixels in Abhängigkeit von dem Pixelwert zumindest eines vorbestimmten anderen Pixels unter Verwendung wenigstens einer Schätzregel, wobei das zumindest eine vorbestimmte andere Pixel in Abhängigkeit von der Pixelgruppe des betreffenden Pixels gewählt ist;
- Bilden eines Differenzwerts des betreffenden Pixels, der einer vorbestimmten Relation zwischen dem Pixelwert und dem geschätzten Pixelwert des betreffenden Pixels entspricht; und
- Kodieren des Differenzwerts unter Verwendung eines Kodierverfahrens.

Zusammengefasst werden die Pixelwerte in Abhängigkeit einer jeweiligen Gruppenzughörigkeit des betreffenden Pixels zunächst in Differenzwerte überführt, die sodann jeweils kodiert werden. Die Komprimierung der Pixelwerte erfolgt somit in Abhängigkeit einer jeweiligen Pixelgruppe. Jede Pixelgruppe ist auf der Grundlage von mehreren vorbestimmten Pixelreihen definiert, d.h. eine Pixelgruppe stützt sich auf die vorgegebene Anordnung in Pixelreihen. Eine Pixelgruppe kann hierbei zumindest einen Teil, d.h. eine Untermenge der Pixel der betreffenden Pixelreihen umfassen. Die Pixelgruppe kann somit eine vorbestimmte Auswahl von Pixeln aus mehreren vorbestimmten Pixelreihen sein, d.h. die Pixelgruppe kann sich aus vorbestimmten Pixeln zusammensetzen, die aus mehreren Pixelreihen stammen. Das für die Zuordnung eines betreffenden Pixels herangezogene Gruppierungsschema kann für jede Pixelgruppe Positionsinformationen derjenigen Pixel umfassen, die der betreffenden Pixelgruppe angehören. Ein betreffendes Pixel kann gemäß dem Gruppierungsschema dann derjenigen Pixelgruppe zugeordnet werden, die die Positionsinformation (z.B. einen Spalten- und Zeilenindex) des betreffenden Pixels aufweist.

Die Gruppierung der Pixel auf der Grundlage von Pixelreihen und deren Verarbeitung in Abhängigkeit der Gruppen erlaubt eine wesentliche Beschleunigung des Komprimierungsvorgangs, insbesondere aber nicht ausschließlich bei Verwendung von Grafikprozessoren, die für die schnelle parallele Verarbeitung von Daten besonders geeignet sind. Andererseits erlaubt das Verfahren auch eine signifikante Reduzierung des mit der Ermittlung des geschätzten Pixelwerts verbundenen Rauschens, wodurch die Kodierung effizienter erfolgen kann, wie nachfolgend noch genauer erläutert wird. Das Verfahren beruht auf der Erkenntnis, dass sich die Pixelwerte durchaus in systematischer Weise voneinander unterscheiden können und dass diese Unterschiede zumindest bei der Ermittlung der geschätzten Pixelwerte auch systematisch ausgenutzt werden können, um die Kompression der Bilddaten effizienter zu gestalten. Vorteilhaft werden die Unterschiede zwischen den Pixelwerten bereits im Zuge der Ermittlung der geschätzten Pixelwerte ausgenutzt. Die nachfolgende Kodierung profitiert hiervon ebenfalls im Sinne einer erhöhten Effizienz.

Das Ermitteln der geschätzten Pixelwerte erfolgt vorzugsweise durch ein sogenanntes Prädiktionsverfahren, bei dem ein jeweiliger Pixelwert z.B. durch eine gewichtete Linearkombination (oder eine nichtlineare Kombination) vorbestimmter anderer Pixelwerte geschätzt bzw. vorhergesagt wird (Schätzregel). Die Differenzwerte entsprechen somit einem Schätz- bzw. Vorhersagefehler, der in der Regel deutlich kleiner als der zugrundeliegende Pixelwert ist. Im Vergleich zu der Verteilung der Pixelwerte wird hierdurch eine Verschiebung und/oder Verformung der Verteilung der Differenzwerte hin zu geringeren Werten bewirkt, d.h. die Differenzwerte sind statistisch gesehen kleiner als die zugrundeliegenden Pixelwerte, wobei dieser Effekt unabhängig von einem formalen Wertebereich sein kann. Aufgrund der veränderten Verteilung können die Differenzwerte vorteilhaft binär durch eine geringere Anzahl von Bits (insbesondere mittels Entropiekodierung) kodiert werden, sodass die Bilddaten insgesamt durch eine geringere Anzahl von Bits kodiert und hierdurch komprimiert werden können.

Das Gruppierungsschema ist vorzugsweise vorbestimmt und definiert letztlich, welches oder welche Pixel für die Schätzung des betreffenden Pixels heranzuziehen sind. Das Gruppierungsschema definiert eine Einteilung oder Unterteilung der Pixel, die sich auf die Ermittlung der geschätzten Pixelwerte auswirkt. Das Gruppierungsschema kann hierbei an eine Statistik oder eine sonstige Eigenschaft der Pixel angepasst sein, sodass die Pixel einer jeweiligen Pixelgruppe (bzw. Pixelklasse) jeweils optimal im Sinne einer maximalen Effizienz des Kompressionsverfahrens geschätzt werden können. Neben einer Statistik der Pixel kann ferner die Position der für die Schätzung heranzuziehenden Pixel in der Weise berücksichtigt werden, dass die Kompression durch Parallelverarbeitung besonders schnell erfolgen kann. Das Verfahren besitzt somit Vorteile im Sinne eines hohen Kompressionsfaktors und einer hohen erzielbaren Kompressionsgeschwindigkeit. Gleichzeitig erlaubt das Verfahren eine verlustfreie Kompression, wobei die Ausbildung von Artefakten vermieden wird. Mit anderen Worten gehen die Vorteile des Verfahrens nicht auf Kosten der Bildqualität der rekonstruierten Bilddaten.

Das zumindest eine vorbestimmte andere Pixel, welches zur Ermittlung des geschätzten Pixelwerts herangezogen wird kann für jedes Pixel einer jeweiligen Pixelgruppe stets gleich gewählt sein.

Im Rahmen der Offenbarung ist der Begriff "vorbestimmte Reihenfolge" allgemein als eine definierte Reihenfolge zu verstehen, die grundsätzlich beliebig gewählt sein kann. Diese Reihenfolge kann einer aufsteigenden Reihenfolge von Pixeln gemäß einer Pixelreihe entsprechen. Sie kann jedoch auch völlig abweichend definiert sein. Ferner kann die vorbestimmte Reihenfolge durch eine "Einleserichtung" von Pixelwerten und/oder durch einen einheitlichen Pixelindex definiert sein. Die Reihenfolge kann aber auch völlig unabhängig von einer Einlesereihenfolge oder Einleserichtung von Pixelwerten festgelegt sein.

Generell müssen nicht sämtliche Pixelwerte eines jeweiligen Bilddatensatzes, der beispielsweise einem einzelnen Bild einer Bildersequenz entsprechen kann, gemäß dem erfindungsgemäßen Verfahren komprimiert werden, sondern das erfindungsgemäße Verfahren kann auch lediglich für einige der Pixelwerte durchgeführt werden. Beispielsweise kann der Kompression eine Analyse der Bilddaten vorausgehen, wobei als Ergebnis der Analyse für manche (variable oder vorbestimmte) Bildbereiche ein erstes Kompressionsverfahren (insbesondere das erfindungsgemäße Verfahren) und für andere Bildbereiche ein hiervon verschiedenes zweites Kompressionsverfahren verwendet wird, insbesondere um zulasten eines höheren Rechenaufwands und/oder einer schlechteren Parallelisierbarkeit eine stärkere Kompressionsrate und/oder einen geringeren Speicherbedarf zu erzielen.

Die Erfindung ist generell auch nicht auf eine bestimmte Reihenfolge der Kompression der Pixelwerte bzw. der Anordnung der zugeordneten Pixel eingeschränkt.

Im Rahmen der Erfindung ist es auch nicht ausgeschlossen, dass nach dem Erzeugen der originären Bilddaten (beispielsweise mittels eines Bildsensors) und vor dem Komprimieren der Pixelwerte noch Vorverarbeitungsschritte durchgeführt werden (z.B. Quantisierung, Linearisierung, Gamma-Kurve).

Vorteilhafte Ausführungsformen sind in den abhängigen Ansprüchen, der Beschreibung und den Figuren offenbart.

Nach einer Ausführungsform umfassen die Bilddaten Pixelwerte verschiedener Farben, wobei der Pixelwert des betreffenden Pixels und der Pixelwert des zumindest einen vorbestimmten anderen Pixels derselben Farbe entsprechen. Mit anderen Worten werden für die Schätzung des betreffenden Pixelwerts nur Pixelwerte derselben Farbe herangezogen. Die Kompression ist hierdurch einerseits gut parallelisierbar, z.B. wenn die Bilddaten durch einen Bildsensor erzeugt wurden, der mehrere Farbfilter aufweist (z.B. Bayer-Sensor). Ferner unterscheiden sich die Pixelwerte zwischen den Farben bezüglich ihrer Statistik (Verteilung der Pixelwerte). Diese kann durch das Gruppierungsschema vorteilhaft berücksichtigt werden, indem jede der mehreren Pixelgruppen jeweils nur Pixel einer Farbe aufweist.

Die mehreren Pixelgruppen können zumindest eine erste Pixelgruppe und eine zweite Pixelgruppe umfassen, wobei, wenn das betreffende Pixel der ersten Pixelgruppe zugordnet wird, das betreffende Pixel und das zumindest eine vorbestimmte andere Pixel derselben Pixelreihe angehören können. Ferner kann, wenn das betreffende Pixel der zweiten Pixelgruppe zugordnet wird, das Ermitteln des geschätzten Pixelwerts in Abhängigkeit von mehreren vorbestimmten anderen Pixeln erfolgen, die derselben Pixelreihe wie das betreffende Pixel und/oder zumindest einer anderen Pixelreihe angehören. Eine derartige Definition der Pixelgruppen bringt wiederum Vorteile hinsichtlich der effizienten Parallelisierbarkeit mit sich. Einerseits sind die Pixel der ersten Pixelgruppe unabhängig von anderen Pixelreihen komprimierbar. Andererseits sind die Pixel der zweiten Pixelgruppe in Abhängigkeit von Pixeln anderer Pixelreihen komprimierbar, wodurch insbesondere eine genauere Schätzung des Pixelwerts erzielt werden kann. Die anderen Pixel können hierbei vorteilhaft der ersten Pixelgruppe angehören, um die Kompressionseffizienz noch weiter zu erhöhen. Die Aufteilung der Pixel in die erste und zweite Pixelgruppe erlaubt es, einen optimalen Kompromiss zwischen Schätzgenauigkeit und Kompressionsgeschwindigkeit zu erzielen.

Die zumindest eine andere Pixelreihe, die wenigstens ein Pixel zur Schätzung des Pixelwerts der zweiten Pixelgruppe beinhaltet, kann zu der Pixelreihe des betreffenden Pixels unmittelbar benachbart oder mittelbar benachbart sein. Die zumindest eine andere Pixelreihe kann von der Pixelreihe des betreffenden Pixels insbesondere durch eine Pixelreihe beabstandet sein, d.h. die andere Pixelreihe ist eine übernächste Pixelreihe und somit mittelbar benachbart zu der Pixelreihe des betreffenden Pixels. Es kann vorgesehen sein, dass wenn das betreffende Pixel der zweiten Pixelgruppe zugordnet wird, die mehreren vorbestimmten anderen Pixel zumindest ein Pixel umfassen, die derselben Pixelreihe wie das betreffende Pixel angehören und zusätzlich mehrere Pixel umfassen, die den zwei nächstliegenden mittelbar benachbarten Pixelreihen angehören. Diese Auswahl von Pixeln kann abschließend ausgestaltet sein, d.h. die vorbestimmten anderen Pixel einer anderen Pixelreihe können ausschließlich aus den mittelbar benachbarten Pixelreihen stammen, die maximal um eine Pixelreihe von der Pixelreihe des betreffenden Pixels beabstandet sind. Pixel aus der unmittelbar benachbarten Pixelreihe können dann z.B. für die Schätzung von Pixelwerten herangezogen werden, deren Pixel zwar in derselben Pixelreihe liegen, aber einer anderen, insbesondere der nachfolgend genannten dritten Pixelgruppe angehören.

Nach einer weiteren Ausführungsform sieht die wenigstens eine Schätzregel das Bilden einer gewichteten Summe auf der Grundlage der Pixelwerte der mehreren vorbestimmten anderen Pixel vor, wenn das betreffende Pixel der zweiten Pixelgruppe zugordnet wird. Hierbei werden die Pixelwerte jeweils mit einem Gewicht versehen und aufsummiert. Die Gewichte können voneinander verschieden und vorbestimmt sein. Die Gewichte können darüber hinaus so festgelegt sein, dass ein in den Pixelwerten enthaltener Rauschanteil (z.B. Sensorrauschen) durch die Summenbildung reduziert wird. Hierzu kann die gewichtete Summe vorteilhaft durch einen Mittelwert der Pixelwerte der mehreren vorbestimmten anderen Pixel gebildet werden. In diesem Fall ist es bevorzugt, wenn die Gewichte durch Bruchteile gebildet sind, deren Summe unabhängig von der Anzahl der Gewichte einem vorbestimmten Wert, insbesondere dem Wert Eins entspricht. Auf diese Weise kann ein Rauschen, welches näherungsweise z.B. einer Normal- bzw. Gaußverteilung entspricht, ausgemittelt werden, ohne dass die Pixelwerte hierdurch verfälscht werden. Die Schätzgenauigkeit kann hierdurch wirksam erhöht werden, sodass für die Kodierung einer Vielzahl von Differenzwerten insgesamt weniger Bits aufgewendet werden müssen.

Nach einer weiteren Ausführungsform sieht die wenigstens eine Schätzregel für den Fall von Pixeln der ersten Pixelgruppe vor, dass der geschätzte Pixelwert auf der Grundlage eines Pixelwerts eines Pixels ermittelt wird, dessen Position innerhalb der Pixelreihe des betreffenden Pixels vor der Position des betreffenden Pixels gemäß der vorbestimmten Reihenfolge liegt. Hierdurch wird eine besonders effiziente Implementierung des Verfahrens ermöglicht, da sich das wenigstens eine vorbestimmte andere Pixel lediglich in einer Richtung relativ zu dem betreffenden Pixel befindet. Mit anderen Worten muss der "Prädiktor nur in eine Richtung gucken". Ferner ist es bevorzugt, dass im Falle von Pixeln der ersten Pixelgruppe zur Ermittlung des Schätzwertes lediglich ein einziges Pixel herangezogen wird, da weitere Pixel innerhalb der Pixelreihe bereits relativ weit entfernt zu dem betreffenden Pixel liegen und daher in bestimmten Fällen keinen nennenswerten Beitrag liefern können. Ferner kann die Ermittlung des geschätzten Pixelwerts besonders effizient erfolgen, indem als Schätzwert der Pixelwert des einzigen vorbestimmten anderen Pixels verwendet wird. Auf eine mögliche Mittelwertbildung wie im Fall von Pixeln der zweiten Pixelgruppe kann somit zugunsten einer besonders effizienten Schätzung vollständig verzichtet werden.

Die Bilddaten können Pixelwerte einer ersten Farbe (z.B. Rot), Pixelwerte einer zweiten Farbe (z.B. Grün) und Pixelwerte einer dritten Farbe (z.B. Blau) umfassen, wobei für einen jeweiligen Bilddatensatz die Anzahl von Pixelwerten der zweiten Farbe größer als die Anzahl von Pixelwerten der ersten Farbe und größer als die Anzahl von Pixelwerten der dritten Farbe ist. Ein derartiges ungleiches Zahlenverhältnis ist insbesondere bei Verwendung eines Bayer-Sensors gegeben, wobei die Anzahl der grünen Pixel doppelt so hoch ist wie die Anzahl von roten und blauen Pixeln. Es sind jedoch auch andere Sensoren möglich, deren Pixelwerte andere Farben und andere Verhältnisse zwischen den jeweiligen Pixelwerten aufweisen.

Insbesondere im Fall von mindestens drei verschiedenen Farbkanälen können die mehreren Pixelgruppen eine dritte Pixelgruppe umfassen, die durch eine Untermenge von Pixeln der mehreren vorbestimmten Pixelreihen gebildet ist, wobei die Pixelwerte der dritten Pixelgruppe einen ersten Teil der Pixelwerte der zweiten Farbe umfasst, und wobei die Pixelwerte der ersten Pixelgruppe und der zweiten Pixelgruppe einen zweiten Teil der Pixelwerte der zweiten Farbe sowie Pixelwerte der ersten Farbe und dritten Farbe umfassen. Mit anderen Worten können die Pixelwerte einer Farbe, deren Anzahl die Pixelwerte der anderen Farben jeweils übersteigt, auf zwei Pixelgruppen aufgeteilt werden. Die dritte Pixelgruppe kann insbesondere ausschließlich Pixelwerte der zweiten Farbe umfassen. Die Aufteilung der "überzähligen" Pixel kann vorteilhaft ausgenutzt werden, um die Effizienz der Kompression noch weiter zu steigern. So können die Pixel der dritten Pixelgruppe beispielsweise zur Reduzierung des Rauschens und die übrigen Pixel dieser Farbe im Sinne einer schnellen Kompressionsgeschwindigkeit auf die übrigen Pixelgruppen verteilt werden.

Wenn das betreffende Pixel der dritten Pixelgruppe zugordnet wird, wird das Ermitteln des geschätzten Pixelwerts vorzugsweise in Abhängigkeit von mehreren vorbestimmten anderen Pixeln durchgeführt. Diese vorbestimmten anderen Pixel gehören vorzugsweise zumindest einer der Pixelreihe des betreffenden Pixels unmittelbar benachbarten Pixelreihe an, insbesondere ausschließlich. Hierbei ist es auch möglich, dass die mehreren vorbestimmten anderen Pixel Pixel aus den beiden unmittelbar benachbarten Pixelreihen umfassen, insbesondere ausschließlich. Ferner kann die wenigstens eine Schätzregel auch im Falle von Pixeln der dritten Pixelgruppe das Bilden einer gewichteten Summe auf der Grundlage der Pixelwerte der mehreren vorbestimmten anderen Pixel vorsehen. Zur Reduzierung des Rauschens kann die gewichtete Summe ähnlich oder entsprechend zu dem Fall von Pixeln der zweiten Pixelgruppe als Mittelwert ausgeführt sein.

Nach einer bevorzugten Ausführungsform sind die vorbestimmten Pixelreihen der ersten Pixelgruppe und der zweiten Pixelgruppe in der Anordnung von Pixeln paarweise alternierend definiert, d.h. auf zwei Pixelreihen der ersten Pixelgruppe folgen zwei Pixelreihen der zweiten Pixelgruppe und umgekehrt. Hierbei ist es bevorzugt, dass, wenn das betreffende Pixel der zweiten Pixelgruppe zugordnet wird, die mehreren vorbestimmten anderen Pixel, die einer anderen Pixelreihe angehören, der ersten Pixelgruppe angehören, vorzugsweise ausschließlich. Somit kann die Ermittlung des geschätzten Pixelwerts für Pixel der zweiten Pixelgruppe im Hinblick auf außerhalb der betreffenden Pixelreihe liegenden Pixel auf Pixel der ersten Pixelgruppe begrenzt werden. In einer vorteilhaften Implementierung des Verfahrens können dann zumindest teilweise zunächst die Pixel der zweiten Pixelgruppe und sodann die Pixel der ersten Pixelgruppe komprimiert werden.

Es versteht sich, dass an den Rändern der Anordnung von Zeilen und Spalten Anpassungen vorgenommen werden können, die insbesondere eine Abweichung von einem regulären Gruppierungsschema umfassen können. So kann abweichend von der genannten paarweise alternierenden Gruppierung von Pixelreihen vorgesehen sein, dass die letzten vier Pixelreihen keine Pixel der zweiten Pixelgruppe umfassen. Ferner kann abweichend zu dem Fall, dass bestimmte Pixelreihen Pixel der dritten Pixelgruppe umfassen, vorgesehen sein, dass die letzten vier Pixelreihen keine Pixel der dritten Pixelgruppe und insbesondere ausschließlich Pixel der ersten Pixelgruppe umfassen. Es können auch andere oder zusätzliche Anpassungen vorgesehen sein.

Wenn das betreffende Pixel der zweiten Pixelgruppe zugordnet wird, ist es möglich, dass zumindest eines der mehreren vorbestimmten anderen Pixel derselben Pixelreihe wie das betreffende Pixel angehört und eine Position innerhalb der Pixelreihe des betreffenden Pixels aufweist, die vor der Position des betreffenden Pixels gemäß der vorbestimmten Reihenfolge liegt.

Die Pixelwerte von Pixeln zwischen verschiedenen Pixelreihen können zumindest teilweise parallel komprimiert werden, um die Kompressionseffizienz zu steigern. Es ist auch möglich, Pixelwerte von Pixeln, die derselben Pixelreihe angehören, zwischen den mehreren Pixelgruppen zumindest teilweise parallel zu komprimieren. Ferner können Pixelwerte von Pixeln, die derselben Pixelgruppe und derselben Pixelreihe angehören zumindest teilweise in der austeigenden Reihenfolge der Pixelreihe komprimiert werden. Darüber hinaus können die Pixelwerte von Pixeln einer der mehreren Pixelgruppen vor den Pixelwerten von Pixeln einer anderen der mehreren Pixelgruppen komprimiert werden. Beispielsweise können die Pixelwerte der ersten Pixelgruppe vorteilhaft nach den Pixelwerten der zweiten Pixelgruppe komprimiert werden, insbesondere wenn zur Ermittlung der geschätzten Pixelwerte der zweiten Pixelgruppe zwar Pixelwerte der ersten Pixelgruppe herangezogen werden, aber nicht umgekehrt.

Für eine weitere Steigerung der Kompressionseffizienz können die Pixel der mehreren vorbestimmten Pixelreihen quer zu den Pixelreihen in mehrere Pixelstreifen unterteilt werden, wobei die Pixelwerte von Pixeln zwischen den Pixelstreifen zumindest teilweise parallel komprimiert werden. Hierdurch kann die Anzahl der parallel durchzuführenden "streams" erhöht werden, sodass das Verfahren insgesamt schneller durchgeführt werden kann. Die Pixelstreifen umfassen vorzugsweise jeweils dieselbe Anzahl von Pixelreihen.

Generell ist es möglich, dass für eine Mehrzahl der zumindest einigen Pixel der jeweilige Schritt des Zuordnens des betreffenden Pixels zu einer von mehreren Pixelgruppen gemeinsam durchgeführt wird, bevor für diese Mehrzahl von Pixeln der jeweilige Schritt des Ermittelns eines geschätzten Pixelwerts des betreffenden Pixels durchgeführt wird. Alternativ kann der Schritt des Zuordnens des betreffenden Pixels zu einer von mehreren Pixelgruppen für jeden der zumindest einigen Pixel separat durchgeführt werden. Hierbei ist es auch möglich, dass der Schritt des Zuordnens des betreffenden Pixels zu einer von mehreren Pixelgruppen simultan mit dem Schritt des Ermittelns eines geschätzten Pixelwerts des betreffenden Pixels durchgeführt wird. Mit anderen Worten kann der Schritt des Zuordnens in den Schritt der Schätzung in der Weise integriert sein, dass die vorbestimmten Pixel, die zur Ermittlung des geschätzten Pixelwerts herangezogen werden, sich unmittelbar aus der Position des betreffenden Pixels ergeben. Die Gruppenzugehörigkeit des betreffenden Pixels kann sich somit unmittelbar aus der Position des betreffenden Pixels ergeben. Dies muss jedoch nicht zwingend der Fall sein. Beispielsweise kann das vorbestimmte Gruppierungsschema andere oder zusätzliche Kriterien für die Zuordnung der Pixel in eine jeweilige Pixelgruppe umfassen.

Nach einer bevorzugten Ausführungsform entsprechen die mehreren vorbestimmten Pixelgruppen ausschließlich Spalten. Dies bringt wiederum Vorteile hinsichtlich der Kompressionsgeschwindigkeit mit sich, da oftmals mehr Spalten als Zeilen vorgesehen sind. Vorzugsweise stützen sich sämtliche Pixelgruppen auf Pixelreihen, die Spalten entsprechen.

Zur Kodierung der Differenzwerte können grundsätzlich beliebige Kodierverfahren eingesetzt werden, insbesondere jene der Entropiekodierung. Es hat sich jedoch gezeigt, dass für das hier beschriebene Kompressionsverfahren die Differenzwerte besonders vorteilhaft nach einem Kodierverfahren von Golomb-Rice kodiert werden können, welches als solches zum allgemeinen Fachwissen gehört. Ein Kodierverfahren nach Golomb-Rice bietet hier einen guten Kompromiss zwischen der erzielbaren Geschwindigkeit und dem durchschnittlich erzielbaren Kompressionsfaktor.

Alternativ zu einem Kodierverfahren nach Golomb-Rice kann insbesondere ein Kodierverfahren verwendet werden, welches auf vorbestimmten Blocklängen basiert, d.h. ein jeweiliger Differenzwert, der durch ein erstes Binärwort mit einer variablen ersten Länge repräsentiert wird kann durch ein oder mehrere zweite Binärwörter kodiert werden, die jeweils eine vorbestimmte und insbesondere feste Länge aufweisen. Das Kompressionsverfahren kann somit bezüglich der Kodierung besonders effizient durchgeführt werden.

Ein Kodierverfahren nach Golomb-Rice kann vorzugsweise so ausgestaltet sein, dass ein zu kodierender Differenzwert durch einen Kodierparameter dividiert wird, um einen Ganzzahlquotienten und einen Divisionsrest zu ermitteln, wobei der Divisionsrest durch ein erstes Binärwort und der Ganzzahlquotient durch ein zweites Binärwort repräsentiert werden, wobei das erste Binärwort und das zweite Binärwort miteinander verkettet werden. Hierbei kann vorgesehen sein, dass, wenn eine vorbestimmte Relation zwischen dem Ganzzahlquotienten und dem Kodierparameter eine vorbestimmte Grenzbedingung nicht verletzt, das verkettete Binärwort mit einem Kodierinformationsbit verkettet wird, um das Ende des verketteten Binärworts anzuzeigen, wobei andernfalls das verkettete Binärwort nicht mit dem Kodierinformationsbit verkettet wird. Hierbei wird die Information ausgenutzt, dass aufgrund einer vorgebebenen Maximalanzahl von Bits zur Darstellung von Pixelwerten die Pixelwerte nur Werte bis zu einem Maximalwert annehmen können. Ebenso kann die Schätzregel so ausgestaltet sein, dass auch die Differenzwerte nicht größer als dieser Maximalwert werden können. Hieraus ergibt sich eine Maximallänge, d.h. eine Maximalanzahl von Bits des verketteten Binärworts. Wenn das verkettete Binärwort die Maximallänge aufweist, braucht das Ende des Binärworts nicht durch ein Kodierinformationsbit angezeigt zu werden, sodass dieses Kodierinformationsbit zugunsten einer besseren Kompressionsrate eingespart werden kann.

Die Erfindung bezieht sich ferner auf ein Computerprogrammprodukt, umfassend Befehle, die bei der Ausführung des Programms durch einen Computer diesen veranlassen, das Verfahren nach einem der der hier beschrieben Ausführungsformen auszuführen. Das Computerprogrammprodukt kann Software umfassen oder als Software ausgebildet sein, wobei es sich bei der Software um Firmware handeln kann, d.h. um eingebettete Software.

Weiterer Gegenstand der Erfindung ist ein computerlesbares Speichermedium, umfassend Befehle, die bei der Ausführung durch einen Computer diesen veranlassen, das Verfahren nach einem der hier beschrieben Ausführungsformen auszuführen.

Des Weiteren bezieht sich die Erfindung auf eine Vorrichtung mit dem vorstehend genannten computerlesbaren Speichermedium und einer Recheneinrichtung, wobei die Recheneinrichtung dazu angepasst ist, die auf dem Speichermedium gespeicherten Befehle auszuführen. Zur besonders effizienten Ausführung der Befehle ist es bevorzugt, dass die Recheneinrichtung wenigstens einen Grafikprozessor aufweist und/oder mit wenigstens einem Grafikprozessor verbunden ist, insbesondere um die Befehle auszuführen bzw. die Recheneinrichtung gemäß den Befehlen zu betreiben. Ferner können die Befehle allgemein durch ein field programmable gate array (FPGA) implementiert sein. Es versteht sich jedoch, dass die Recheneinrichtung diese Mittel nicht zwingend aufweisen muss und dass das Verfahren auch sonst effizient ausgeführt werden kann.

Die Vorrichtung kann allgemein zum Aufnehmen einer zeitlichen Folge von Einzelbildern ausgebildet sein. Die Vorrichtung kann insbesondere eine Filmkamera bzw. Bewegtbildkamera sein. Die Recheneinrichtung der Vorrichtung ist vorzugsweise dazu ausgebildet, zumindest eines der Einzelbilder gemäß dem vorstehend geschilderten Kompressionsverfahren zu komprimieren. Dies kann insbesondere auch an einer Filmkamera vorteilhaft sein, wobei die Bilddaten in komprimierter Form übertragen werden können. Hierbei wird einerseits wenig Bandbreite für die Übertragung (schnelle Übertragung), andererseits aber auch wenig Speicherplatz zur Speicherung der Bilddaten benötigt. Beispielsweise können die komprimierten Bilddaten leicht an einen entfernten Server übertragen werden, in dem eine virtuelle Cloud für Bilddaten eingerichtet ist. Durch die hier beschriebenen Verfahren ist eine Kompression bzw. Dekompression sogar in Echtzeit möglich, sodass z.B. Einzelbilder unmittelbar nach ihrer Aufnahme komprimiert und in die Ferne übertragen werden können.

Das Verfahren kann allgemein auch in weiteren Vorrichtungen verwirklicht werden, z.B. in einem digitalen Mikroskop, welches insbesondere im Medizinbereich etwa zur Durchführung von Operationen eingesetzt werden kann.

Die Erfindung wird nachfolgend rein beispielhaft unter Bezugnahme auf die Zeichnungen erläutert, wobei
- Fig. 1: eine schematische Pixelanordnung mit Pixeln dreier verschiedener Farben zeigt, wobei jedes Pixel gemäß einem Gruppierungsschema einer von drei verschiedenen Pixelgruppen zugeordnet ist;
- Fig. 2: eine Ermittlung eines geschätzten Pixelwerts eines Pixels einer ersten Pixelgruppe veranschaulicht;
- Fig. 3: eine Ermittlung eines geschätzten Pixelwerts eines Pixels einer zweiten Pixelgruppe veranschaulicht;
- Fig. 4: eine Ermittlung eines geschätzten Pixelwerts eines Pixels einer dritten Pixelgruppe veranschaulicht.

Im Folgenden werden gleiche oder sich entsprechende Elemente durch dieselben Bezugszeichen gekennzeichnet sofern keine besondere Unterscheidung zwischen konkreten Exemplaren von Elementen notwendig ist.

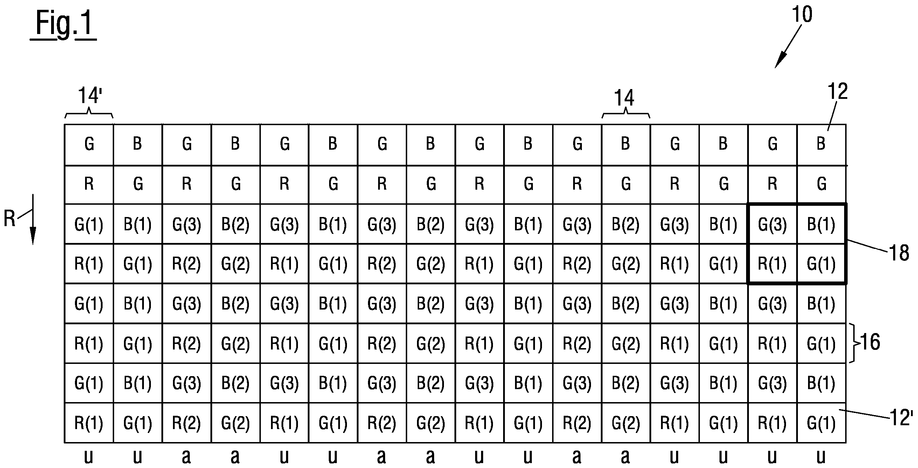

Fig. 1 zeigt einen Bilddatensatz 10, der eine Anordnung von Pixeln 12 in mehreren Pixelreihen umfasst. Jede Zeile 16 und jede Spalte 14 entspricht einer Pixelreihe, wobei der Bilddatensatz 10 in Fig. 1 acht Zeilen 16 und sechzehn Spalten 14 umfasst. Jede Pixelreihe besteht aus einer linearen Anordnung von Pixeln 12 gemäß einer vorbestimmten Reihenfolge R, wobei in Fig. 1 diese Reihenfolge R für die Spalten 14 links von dem Bilddatensatz 10 eingetragen ist.

Die Pixel 12 des Bilddatensatzes 10 umfassen rote Pixel R, grüne Pixel G und blaue Pixel B, die gemäß dem aus Blöcken 18 zusammengesetzten sogenannten Bayer-Muster angeordnet sind. In jeder Spalte 14 sind stets grüne Pixel G vorhanden, aber zusätzlich nur entweder rote oder blaue Pixel. Mit Ausnahme der oberen beiden Zeilen 16 ist jedes Pixel 12 gemäß einem vorbestimmten Gruppierungsschema einer von drei Pixelgruppen zugordnet (Pixel 12'). Die jeweilige Pixelgruppe ist für jedes Pixel 12' in Klammern angegeben, wobei z.B. G(1) bedeutet, dass das betreffende grüne Pixel G der ersten Pixelgruppe zugeordnet ist. Entsprechend bedeutet z.B. R(2), dass das betreffende rote Pixel R der zweiten Pixelgruppe zugeordnet ist. Somit versteht es sich auch, dass z.B. G(3) bedeutet, dass das betreffende grüne Pixel G der dritten Pixelgruppe zugeordnet ist. Wie in Fig. 1 zu erkennen ist, sieht das Gruppierungsschema vor, dass jede Pixelgruppe Pixel 12' vorbestimmter Spalten 14 umfasst. Für die ersten beiden Pixelgruppen sind diese vorbestimmten Spalten 14 paarweise alternierend definiert. Zur Verdeutlichung sind diejenigen Spalten 14, die Pixel 12' der ersten Pixelgruppe "(1)", aber keine Pixel 12' der zweiten Pixelgruppe "(2)" enthalten durch "u" gekennzeichnet, wobei diese Spalten 14 als unabhängige Spalten u bezeichnet werden. Im Gegensatz hierzu sind diejenigen Spalten 14, die Pixel 12' der zweiten Pixelgruppe "(2)", aber keine Pixel 12 der ersten Pixelgruppe "(1)" enthalten durch "a" gekennzeichnet, wobei diese Spalten 14 als abhängige Spalten a bezeichnet werden. Die paarweise alternierende Anordnung der abhängigen Spalten a und der unabhängigen Spalten u ist in Fig. 1 gut zu erkennen, wobei im Bereich der rechten äußeren Spalten 14 eine Anpassung dahingehend besteht, dass diese äußeren beiden Spalten 14 als unabhängige Spalten u festgelegt sind. Die Zugehörigkeit eines Pixels 12' zu der jeweiligen Spaltengruppe (a oder u) kann allgemein in Abhängigkeit eines Spaltenindex i ={0, 1, 2,...,16} ermittelt werden, indem das Ergebnis der Operation i modulo 4 mit dem Wert 2 verglichen wird. Wenn das Ergebnis kleiner als 2 ist, befindet sich das Pixel 12' in einer abhängigen Spalte a, ansonsten in einer unabhängigen Spalte u (Ausnahmen in den rechten äußeren Spalten 14).

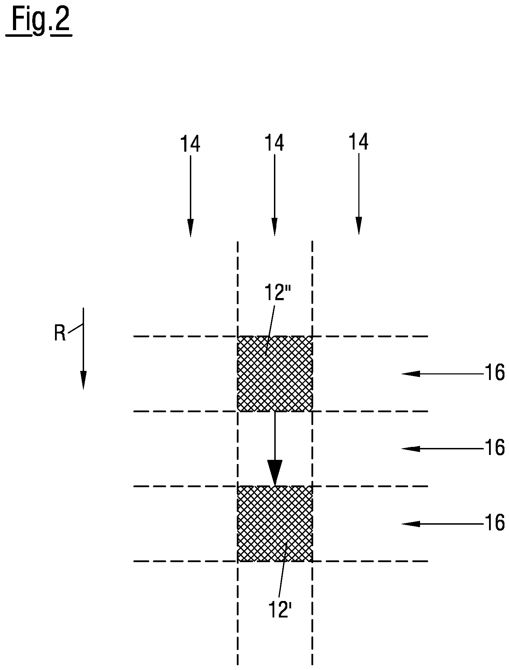

Die grünen Pixel G, die der dritten Pixelgruppe "(3)" angehören, d.h. die Pixel G(3) sind unabhängig von der Unterteilung in abhängige Spalten a und unabhängige Spalten u jeweils durch das obere grüne Pixel G eines jeweiligen Blocks 18 definiert (vgl. Fig. 1). Auch hier besteht eine Ausnahme in der linken äußeren Spalte 14', wo die betreffenden grünen Pixel G der ersten Pixelgruppe zugeordnet sind. Es werden nun diejenigen Pixel 12' komprimiert, die einer jeweiligen Pixelgruppe zugeordnet sind, also alle Zeilen 16 mit Ausnahme der ersten beiden Zeilen 16. Hierzu wird für ein betreffendes Pixel 12' ein geschätzter Pixelwert ermittelt, wobei der Pixelwert wenigstens eines vorbestimmten anderen Pixels 12, 12' herangezogen wird. Für Pixel 12' der ersten Pixelgruppe (R(1), G(1), B(1)) entspricht der geschätzte Pixelwert dem Pixelwert desjenigen Pixels 12, 12', welches gemäß der vorbestimmten Reihenfolge R der betreffenden Spalte 14 vor dem betreffenden Pixel 12' liegt und dieselbe Farbe aufweist. Dies ist in Fig. 2 veranschaulicht, wo für ein betreffendes Pixel 12' ein vorheriges Pixel 12" herangezogen wird, welches von dem betreffenden Pixel 12' um eine Zeile 16 bzw. ein Pixel beabstandet ist. Das betreffende Pixel 12' kann jedes Pixel 12' aus Fig. 1 sein, welches der ersten Pixelgruppe "(1)" zugeordnet ist. Der geschätzte Pixelwert des Pixels 12' von Fig. 2 ist also der Pixelwert des Pixels 12". Sodann wird ein Differenzwert zwischen diesen Pixelwerten gebildet, der durch D1(X, Y) = W(X, Y) - W(X, Y-2) ausgedrückt werden kann, wobei X ein Zeilenindex und Y ein Spaltenindex ist.

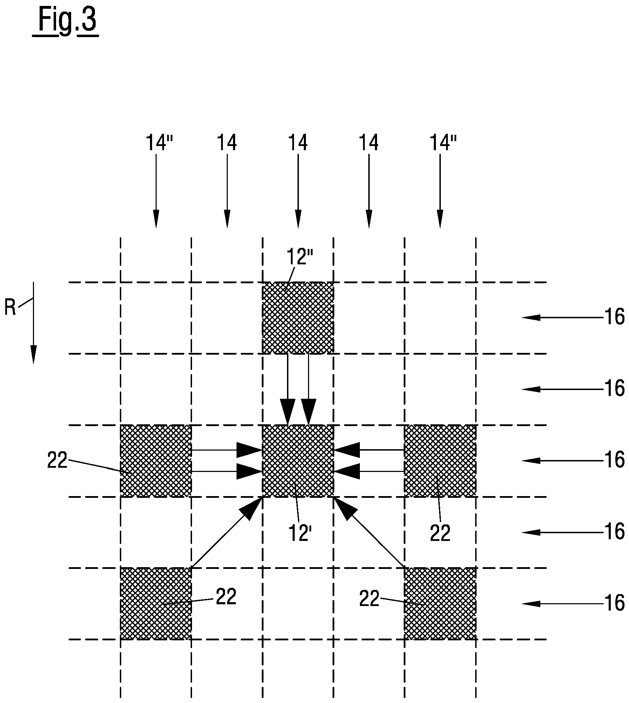

Für Pixel 12', die der zweiten Pixelgruppe zugeordnet sind (R(2), G(2), B(2)) werden zur Ermittlung des geschätzten Pixelwerts zusätzliche Pixel herangezogen. Dies ist in Fig. 3 gezeigt. Ausgehend von dem betreffenden Pixel 12' wird zum einen das Pixel 12" herangezogen, welches in derselben Spalte 14 wie das betreffende Pixel 12' und analog zu dem Fall von Fig. 2 gemäß der Reihenfolge R vor dem betreffenden Pixel 12' angeordnet ist. Zum anderen werden jeweils zwei Pixel 22 herangezogen, welche in den beiden mittelbar benachbarten Spalten 14" angeordnet sind und dieselbe Farbe wie das betreffende Pixel 12' aufweisen (vgl. Fig. 1). Der geschätzte Pixelwert des betreffenden Pixels 12' wird als Mittelwert der Pixelwerte der Pixel 12', 22 ermittelt. Sodann wird wiederum ein Differenzwert zwischen dem Pixelwert des betreffenden Pixels 12' und der vorbestimmten anderen Pixel 12", 22 gebildet. Der Differenzwert kann ausgedrückt werden durch D2(X, Y) = W(X, Y) - (2*W(X, Y-2) + 2*W(X-2, Y) + 2*W(X+2, Y) + W(X+2, Y+2) + W(X-2, Y-2))/8. Hierbei bezeichnet "*" eine Multiplikation und "/" eine Division. Aus der Formel für den Differenzwert ergibt sich, dass die Pixelwerte der in Fig. 3 näherliegenden Pixel (die oberen drei Pixel 12", 22) stärker gewichtet werden als die diagonal und somit weiter entfernten Pixel (die unteren beiden Pixel 22). Durch die Mittelwertbildung wird insbesondere ein in jedem Pixelwert vorhandenes Sensorrauschen reduziert.

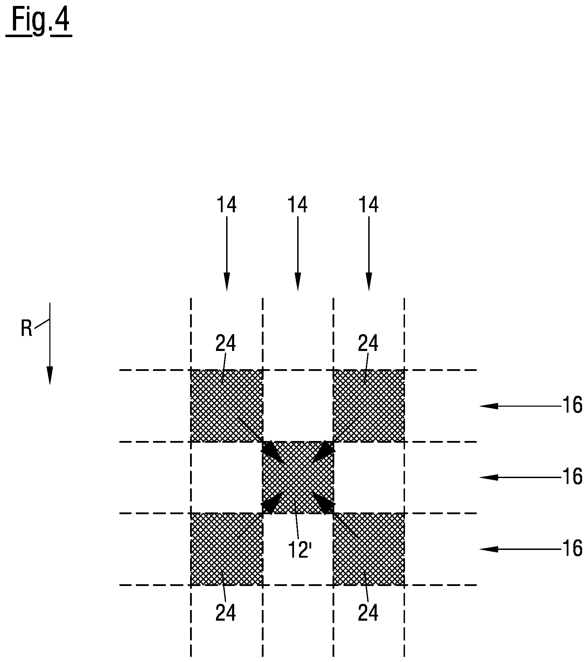

Für Pixel 12', die der dritten Pixelgruppe zugeordnet sind (G(3)) werden zur Ermittlung des geschätzten Pixelwerts die nächstliegenden Pixel 24 derselben Farbe herangezogen, die sich bei dem Bayer-Muster von Fig. 1 jeweils diagonal gegenüberliegend in den beiden unmittelbar benachbarten Spalten 14 befinden. Dies ist in Fig. 4 gezeigt. Die Pixelwerte dieser unmittelbar benachbarten Pixel 24 werden wiederum gemittelt, um den geschätzten Pixelwert des betreffenden Pixels 12' zu erhalten. Der Differenzwert kann für das betreffende Pixel 12' durch die Formel D3(X, Y) = W(X, Y) - (W(X-1, Y-1) + W(X-1, Y+1) + W(X+1, Y-1) + W(X+1, Y+1))/4 angegeben werden.

Die Differenzwerte können insbesondere auch negativ sein. Vor der Kodierung eines jeweiligen Differenzwerts kann der Differenzwert gemäß einer vorbestimmten Transformationsregel auf einen Wertebereich abgebildet werden, der ausschließlich positive Werte (inklusive Null) umfasst. Die Transformationsregel kann hierzu so ausgestaltet sein, dass ein betreffender negativer Differenzwert auf ungerade Werte abgebildet wird (z.B. durch D*2-1). Ein betreffender positiver Differenzwert kann hingegen auf gerade Werte abgebildet werden (z.B. durch D*2).

Im Folgenden wird ein Kodierverfahren nach Golomb-Rice beschrieben, welches zur Kodierung eines jeweiligen Differenzwerts D (insbesondere D1, D2 und D3) verwendet werden kann. Zur Kodierung wird ein vorgegebener Parameter k verwendet, der auch als Steuerungsparameter bezeichnet werden kann. Zur Kodierung wird zunächst A = D % 2^{k} berechnet, wobei "%" die modulo-Operation bezeichnet. A entspricht somit einem Divisionsrest, welcher durch ein erstes Binärwort mit k Bits repräsentiert wird. Sofern die Binärform von A weniger als k Bits umfasst, wird mit nullwertigen Bits aufgefüllt.

Ferner wird B = D / 2^{k} als Ganzzahlquotient berechnet (d.h. ohne Divisionsrest), wobei B durch ein zweites Binärwort repräsentiert wird, welches eine Anzahl von einswertigen Bits umfasst, die dem Wert B entspricht.

In einem ersten Beispiel soll ein Differenzwert D = 61 mit k = 6 kodiert werden, der in Binärform dem Binärwort 111101 entspricht. Die oben genannten Berechnungen ergeben in diesem Fall, dass A = 61 und durch ein erstes Binärwort 111101 repräsentiert wird. Der Ganzzahlquotient ist hierbei gleich Null (B = 0), sodass das zweite Binärwort keine Bits umfasst. Das erste und zweite Binärwort werden dann formal miteinander und mit einem nullwertigen Kodierinformationsbit verkettet, sodass sich folgendes Binärwort ergibt: 1111010.

In einem zweiten Beispiel soll ein Differenzwert D = 133 mit k = 6 kodiert werden, der in Binärform dem Binärwort 10000101 entspricht. In diesem Fall ist A = 5, sodass das erste Binärwort 000101 ist. Ferner ist B = 2, sodass sich als verkettetes Binärwort inklusive dem Kodierinformationsbit 000101110 ergibt.

Die Pixelwerte der Bilddaten sowie die Differenzwerte können auf Werte zwischen 0 und einem vorbestimmten Maximalwert MAXVAL beschränkt sein. Es kann somit in Abhängigkeit des Parameters k eine Grenzbedingung dergestalt definiert sein, dass (B + 1) * 2^{k} generell kleiner als MAXVAL ist. Wenn (B + 1) * 2^{k} größer oder gleich MAXVAL ergibt sich implizit, dass das betreffende verkettete Binärwort enden muss und es kann auf das Kodierinformationsbit verzichtet werden. In einem weiteren Beispiel mit k = 10, D = 3643 ergibt sich, dass A = 571 und das erste Binärwort demnach 111000111011 ist, wobei B = 3. Das verkettete Binärwort ist dann 1000111011111.

Die jeweils verketteten Binärwörter können jeweils in einen Bitstrom geschrieben werden, der zusammen mit einer Headerdatei komprimierte Bilddaten repräsentiert.

### Bezugszeichenliste

- 10: Bilddatensatz
- 12, 12', 12": Pixel
- 14, 14': Spalte
- 16: Zeile
- 18: Block
- 22: Pixel
- 24: Pixel
- G: grünes Pixel
- R: rotes Pixel
- B: blaues Pixel
- R: vorbestimmte Reihenfolge

## Patentansprüche

1. Verfahren zur Kompression von Bilddaten (10), die eine Vielzahl von Pixelwerten umfassen, die einem jeweiligen Pixel (12) einer Vielzahl von Pixeln (12) zugeordnet sind, wobei die Pixel (12) in einer Anordnung von Zeilen (16) und Spalten (14) vorgesehen sind, wobei jede Zeile (16) oder Spalte (14) einer Pixelreihe mit einer vorbestimmten Reihenfolge (R) von Pixeln (12) entspricht,
wobei für zumindest einige Pixel (12) die Pixelwerte gemäß den folgenden Schritten komprimiert werden:
- Zuordnen des betreffenden Pixels (12') zu einer von mehreren Pixelgruppen gemäß einem vorbestimmten Gruppierungsschema, wobei jede der mehreren Pixelgruppen durch die Pixel mehrerer vorbestimmter Pixelreihen (14, a, u) oder durch eine Untermenge von Pixeln von mehreren vorbestimmten Pixelreihen (14, a, u) definiert ist und wobei die Zugehörigkeit des betreffenden Pixels (12') zu der Pixelgruppe sich unmittelbar aus der Position des betreffenden Pixels (12') ergibt;
- Ermitteln eines geschätzten Pixelwerts des betreffenden Pixels (12') in Abhängigkeit von dem Pixelwert zumindest eines vorbestimmten anderen Pixels (12", 22, 24) unter Verwendung wenigstens einer Schätzregel, wobei das zumindest eine vorbestimmte andere Pixel (12", 22, 24) in Abhängigkeit von der Pixelgruppe des betreffenden Pixels (12') gewählt ist,
wobei die mehreren Pixelgruppen eine erste Pixelgruppe und eine zweite Pixelgruppe umfassen,
wobei, wenn das betreffende Pixel (12') der ersten Pixelgruppe zugordnet wird, das betreffende Pixel (12') und das zumindest eine vorbestimmte andere Pixel (12") derselben Pixelreihe (14) angehören,
wobei, wenn das betreffende Pixel (12') der zweiten Pixelgruppe zugordnet wird, das Ermitteln des geschätzten Pixelwerts in Abhängigkeit von mehreren vorbestimmten anderen Pixeln (12", 22, 24) durchgeführt wird, die zumindest einer anderen Pixelreihe (14, 14") angehören,
wobei die vorbestimmten Pixelreihen (a, u) der ersten Pixelgruppe und der zweiten Pixelgruppe in der Anordnung von Pixeln (12) paarweise alternierend definiert sind, wobei, wenn das betreffende Pixel (12') der zweiten Pixelgruppe zugordnet wird, die mehreren vorbestimmten anderen Pixel (22), die einer anderen Pixelreihe (14") angehören, der ersten Pixelgruppe angehören;
- Bilden eines Differenzwerts (D1, D2, D3) des betreffenden Pixels (12), der einer vorbestimmten Relation zwischen dem Pixelwert und dem geschätzten Pixelwert des betreffenden Pixels (12') entspricht; und
- Kodieren des Differenzwerts (D1, D2, D3) unter Verwendung eines Kodierverfahrens.

2. Verfahren nach Anspruch 1,
wobei die Bilddaten (10) Pixelwerte verschiedener Farben (R, G, B) umfassen, und wobei der Pixelwert des betreffenden Pixels (12') und der Pixelwert des zumindest einen vorbestimmten anderen Pixels (12", 22, 24) derselben Farbe entsprechen.

3. Verfahren nach Anspruch 1 oder 2,
wobei die zumindest eine andere Pixelreihe (14) zu der Pixelreihe (14, 14") des betreffenden Pixels (12') unmittelbar benachbart oder mittelbar benachbart ist;
insbesondere wobei die zumindest eine andere Pixelreihe (14, 14") von der Pixelreihe (14) des betreffenden Pixels (12') durch eine Pixelreihe (14) beabstandet ist.

4. Verfahren nach Anspruch 3,
wobei, wenn das betreffende Pixel (12') der zweiten Pixelgruppe zugordnet wird, die wenigstens eine Schätzregel das Bilden einer gewichteten Summe auf der Grundlage der Pixelwerte der mehreren vorbestimmten anderen Pixel (12", 22, 24) vorsieht, wobei die gewichtete Summe vorzugsweise durch einen Mittelwert der Pixelwerte der mehreren vorbestimmten anderen Pixel (12", 22, 24) gebildet wird;
und/oder
wobei, wenn das betreffende Pixel (12') der ersten Pixelgruppe zugordnet wird, die wenigstens eine Schätzregel vorsieht, dass der geschätzte Pixelwert auf der Grundlage eines Pixelwerts eines Pixels (12") ermittelt wird, dessen Position innerhalb der Pixelreihe (14) des betreffenden Pixels (12') vor der Position des betreffenden Pixels (12') gemäß der vorbestimmten Reihenfolge liegt.

5. Verfahren nach einem der vorhergehenden Ansprüche,
wobei die Pixelwerte von Pixeln (12') zwischen verschiedenen Pixelreihen (14) zumindest teilweise parallel komprimiert werden;
und/oder
wobei die Pixelwerte von Pixeln (12'), die derselben Pixelgruppe und derselben Pixelreihe (14) angehören, zumindest teilweise in der vorbestimmten Reihenfolge (R) der Pixelreihe (14) komprimiert werden;
und/oder
wobei die Pixelwerte von Pixeln (12') einer der mehreren Pixelgruppen vor den Pixelwerten von Pixeln einer anderen der mehreren Pixelgruppen komprimiert werden.

6. Verfahren nach einem der vorhergehenden Ansprüche,
wobei für eine Mehrzahl der zumindest einigen Pixel (12') der jeweilige Schritt des Zuordnens des betreffenden Pixels (12') zu einer von mehreren Pixelgruppen gemeinsam durchgeführt wird, bevor für diese Mehrzahl von Pixeln der jeweilige Schritt des Ermittelns eines geschätzten Pixelwerts des betreffenden Pixels (12') durchgeführt wird; oder wobei der Schritt des Zuordnens des betreffenden Pixels (12') zu einer von mehreren Pixelgruppen für jeden der zumindest einigen Pixel separat durchgeführt wird;
und/oder
wobei die mehreren vorbestimmten Pixelreihen ausschließlich Spalten (14) entsprechen.

7. Verfahren nach einem der vorhergehenden Ansprüche,
wobei die Differenzwerte (D1, D2, D3) nach einem Kodierverfahren von Golomb-Rice kodiert werden;
insbesondere wobei ein zu kodierender Differenzwert (D) durch einen Kodierparameter (k) dividiert wird, um einen Ganzzahlquotienten (B) und einen Divisionsrest (A) zu ermitteln, wobei der Divisionsrest (A) durch ein erstes Binärwort und der Ganzzahlquotient (B) durch ein zweites Binärwort repräsentiert werden, wobei das erste Binärwort und das zweite Binärwort miteinander verkettet werden, wobei, wenn eine vorbestimmte Relation zwischen dem Ganzzahlquotienten und dem Kodierparameter eine vorbestimmte Grenzbedingung nicht verletzt, das verkettete Binärwort mit einem Kodierinformationsbit verkettet wird, um das Ende des verketteten Binärworts anzuzeigen, wobei andernfalls das verkettete Binärwort nicht mit dem Kodierinformationsbit verkettet wird.

8. Computerprogrammprodukt, umfassend Befehle, die bei der Ausführung durch einen Computer diesen veranlassen, das Verfahren nach einem der vorstehenden Ansprüche auszuführen.

9. Computerlesbares Speichermedium, umfassend Befehle, die bei der Ausführung durch einen Computer diesen veranlassen, das Verfahren nach einem der Ansprüche 1 bis 7 auszuführen.

10. Vorrichtung mit einem computerlesbaren Speichermedium nach Anspruch 9 und mit einer Recheneinrichtung, wobei die Recheneinrichtung dazu angepasst ist, die auf dem Speichermedium gespeicherten Befehle auszuführen.

11. Vorrichtung nach Anspruch 10,
wobei die Recheneinrichtung wenigstens einen Grafikprozessor aufweist und/oder mit wenigstens einem Grafikprozessor verbunden ist,
und/oder
wobei die Vorrichtung zum Aufnehmen einer zeitlichen Folge von Einzelbildern ausgebildet ist, insbesondere wobei die Vorrichtung eine Bewegtbildkamera ist, wobei die Recheneinrichtung dazu ausgebildet ist, zumindest eines der Einzelbilder gemäß dem Verfahren nach einem der Ansprüche 1 bis 7 zu komprimieren.

## Claims

1. A method of compressing image data (10) that comprise a plurality of pixel values which are associated with a respective pixel (12) of a plurality of pixels (12), wherein the pixels (12) are provided in an arrangement of rows (16) and columns (14), with each row (16) or column (14) corresponding to a pixel alignment having a predetermined order (R) of pixels (12),
wherein the pixel values for at least some pixels (12) are compressed in accordance with the following steps:
- associating the respective pixel (12') with one of a plurality of pixel groups in accordance with a predetermined grouping scheme, with each of the plurality of pixel groups being defined by the pixels of a plurality of predetermined pixel alignments (14, a, u) or by a subset of pixels of a plurality of predetermined pixel alignments (14, a, u) and wherein the affiliation of the respective pixel (12') with the pixel group results directly from the position of the respective pixel (12');
- determining an estimated pixel value of the respective pixel (12') in dependence on the pixel value of at least one predetermined other pixel (12", 22, 24) while using at least one estimation rule, with the at least one predetermined other pixel (12", 22, 24) being selected in dependence on the pixel group of the respective pixel (12'),
wherein the plurality of pixel groups comprise a first pixel group and a second pixel group,
wherein, when the respective pixel (12') is associated with the first pixel group, the respective pixel (12') and the at least one predetermined other pixel (12") belong to the same pixel alignment (14),
wherein, when the respective pixel (12') is associated with the second pixel group, the determination of the estimated pixel value is carried out in dependence on a plurality of predetermined other pixels (12", 22, 24) that belong to at least one other pixel alignment (14, 14"),
wherein the predetermined pixel alignments (a, u) of the first pixel group and the second pixel group are defined alternatingly pairwise in the arrangement of pixels (12), wherein, when the respective pixel (12') is associated with the second pixel group, the plurality of predetermined other pixels (22) that belong to a different pixel alignment (14") belong to the first pixel group;
- forming a difference value (D1, D2, D3) of the respective pixel (12) that corresponds to a predetermined relation between the pixel value and the estimated pixel value of the respective pixel (12'); and
- encoding the difference value (D1, D2, D3) using an encoding process.

2. A method according to claim 1,
wherein the image data (10) comprise pixel values of different colors (R, G, B); and wherein the pixel value of the respective pixel (12') and the pixel value of the at least one predetermined other pixel (12", 22, 24) correspond to the same color.

3. A method according to claim 1 or 2,
wherein the at least one other pixel alignment (14) is directly adjacent or indirectly adjacent to the pixel alignment (14, 14") of the respective pixel (12"),
in particular wherein the at least one other pixel alignment (14, 14") is spaced apart from the pixel alignment (14) of the respective pixel (12') by a pixel alignment (14).

4. A method according to claim 3,
wherein, when the respective pixel (12') is associated with the second pixel group, the at least one estimation rule provides the forming of a weighted sum on the basis of the pixel values of the plurality of predetermined other pixels (12", 22, 24), wherein the weighted sum is preferably formed by a mean value of the pixel values of the plurality of predetermined other pixels (12", 22, 24); and/or
wherein, when the respective pixel (12') is associated with the first pixel group, the at least one estimation rule provides that the estimated pixel value is determined on the basis of a pixel value of a pixel (12") whose position within the pixel alignment (14) of the respective pixel (12') is before the position of the respective pixel (12') in accordance with the predetermined order.

5. A method according to any one of the preceding claims,
wherein the pixel values of pixels (12') between different pixel alignments (14) are at least partly compressed in parallel;
and/or
wherein the pixel values of pixels (12') that belong to the same pixel group and to the same pixel alignment (14) are at least partly compressed in the predetermined order (R) of the pixel alignment (14);
and/or
wherein the pixel values of pixels (12') of one of the plurality of pixel groups are compressed before the pixel values of pixels of a different one of the plurality of pixel groups.

6. A method according to any one of the preceding claims,
wherein the respective step of associating the respective pixel (12') with one of a plurality of pixel groups is carried out in common for a plurality of the at least some pixels (12') before the respective step of determining an estimated pixel value of the respective pixel (12') is carried out for this plurality of pixels; or wherein the step of associating the respective pixel (12') with one of a plurality of pixel groups is carried out separately for each of the at least some pixels;
and/or
wherein the plurality of predetermined pixel alignments exclusively correspond to columns (14).

7. A method according to any one of the preceding claims,
wherein the difference values (D1, D2, D3) are encoded in accordance with a Golomb-Rice encoding process,
in particular wherein a difference value (D) to be encoded is divided by an encoding parameter (k) to determine a whole number quotient (B) and a remainder (A), with the remainder (A) being represented by a first binary word and the whole number quotient (B) being represented by a second binary word, and with the first binary word and the second binary word being concatenated with one another; and wherein, when a predetermined relation between the whole number quotient and the encoding parameter does not infringe a predetermined marginal condition, the concatenated binary word is concatenated with an encoding information bit to indicate the end of the concatenated binary word, with the concatenated binary word otherwise not being concatenated with the encoding information bit.

8. A computer program product comprising commands which, on execution by a computer, cause it to carry out the method according to any one of the preceding claims.

9. A computer readable storage medium comprising commands which, on execution by a computer, cause it to carry out the method according to any one of the claims 1 to 7.

10. An apparatus having a computer readable storage medium according to claim 9 and having a computing device, wherein the computing device is adapted to execute the commands stored on the storage medium.

11. An apparatus according to claim 10,
wherein the computing device has at least one graphics processor and/or is connected to at least one graphics processor;
and/or
wherein the apparatus is configured for recording a time sequence of frames, in particular wherein the apparatus is a moving image camera, and wherein the computing device is configured to compress at least one of the frames in accordance with the method according to any one of the claims 1 to 7.

## Revendications

1. Procédé de compression de données d'image (10) qui comprennent une pluralité de valeurs de pixel associées à un pixel respectif (12) d'une pluralité de pixels (12), les pixels (12) étant prévus selon un agencement de lignes (16) et de colonnes (14), chaque ligne (16) ou colonne (14) correspondant à une rangée de pixels ayant un ordre prédéterminé (R) de pixels (12),
dans lequel, pour au moins certains pixels (12), les valeurs de pixel sont compressées conformément aux étapes suivantes consistant à :
- associer le pixel concerné (12') à un groupe de pixels parmi une pluralité de groupes de pixels selon un schéma de regroupement prédéterminé, sachant que chacun de la pluralité de groupes de pixels est défini par les pixels d'une pluralité de rangées de pixels prédéterminées (14, a, u) ou par un sous-ensemble de pixels d'une pluralité de rangées de pixels prédéterminées (14, a, u), et que l'appartenance du pixel concerné (12') au groupe de pixels résulte directement de la position du pixel concerné (12') ;
- déterminer une valeur de pixel estimée du pixel concerné (12') en fonction de la valeur de pixel d'au moins un autre pixel prédéterminé (12", 22, 24) en utilisant au moins une règle d'estimation, ledit au moins un autre pixel prédéterminé (12", 22, 24) étant choisi en fonction du groupe de pixels du pixel concerné (12'),
la pluralité de groupes de pixels comprenant un premier groupe de pixels et un deuxième groupe de pixels,
sachant que, lorsque le pixel concerné (12') est associé au premier groupe de pixels, le pixel concerné (12') et ledit au moins un autre pixel prédéterminé (12") appartiennent à la même rangée de pixels (14),
lorsque le pixel concerné (12') est associé au deuxième groupe de pixels, la détermination de la valeur de pixel estimée est effectuée en fonction d'une pluralité d'autres pixels prédéterminés (12", 22, 24) appartenant à au moins une autre rangée de pixels (14, 14"),
les rangées de pixels prédéterminées (a, u) du premier groupe de pixels et du deuxième groupe de pixels sont définies en alternance par paires dans l'agencement de pixels (12), sachant que, lorsque le pixel concerné (12') est associé au deuxième groupe de pixels, la pluralité d'autres pixels prédéterminés (22) appartenant à une autre rangée de pixels (14") appartiennent au premier groupe de pixels ;
- former une valeur différentielle (D1, D2, D3) du pixel concerné (12), laquelle correspond à une relation prédéterminée entre la valeur de pixel et la valeur de pixel estimée du pixel concerné (12') ; et
- coder la valeur différentielle (D1, D2, D3) en utilisant un procédé de codage.

2. Procédé selon la revendication 1,
dans lequel les données d'image (10) comprennent des valeurs de pixel de différentes couleurs (R, G, B), et la valeur de pixel du pixel concerné (12') et la valeur de pixel dudit au moins un autre pixel prédéterminé (12", 22, 24) correspondent à la même couleur.

3. Procédé selon la revendication 1 ou 2,
dans lequel ladite au moins une autre rangée de pixels (14) est directement adjacente ou indirectement adjacente à la rangée de pixels (14, 14") du pixel concerné (12') ;
en particulier, ladite au moins une autre rangée de pixels (14, 14") est espacée de la rangée de pixels (14) du pixel concerné (12') par une rangée de pixels (14).

4. Procédé selon la revendication 3,
dans lequel, lorsque le pixel concerné (12') est associé au deuxième groupe de pixels, ladite au moins une règle d'estimation prévoit la formation d'une somme pondérée en se basant sur les valeurs de pixel de la pluralité d'autres pixels prédéterminés (12", 22, 24), la somme pondérée étant de préférence formée par une valeur moyenne des valeurs de pixel de la pluralité d'autres pixels prédéterminés (12", 22, 24) ;
et/ou
lorsque le pixel concerné (12') est associé au premier groupe de pixels, ladite au moins une règle d'estimation prévoit que la valeur de pixel estimée est déterminée en se basant sur une valeur de pixel d'un pixel (12") dont la position au sein de la rangée de pixels (14) du pixel concerné (12') est antérieure à la position du pixel concerné (12') selon l'ordre prédéterminé.

5. Procédé selon l'une des revendications précédentes,
dans lequel les valeurs de pixel de pixels (12') entre différentes rangées de pixels (14) sont compressées au moins partiellement en parallèle ;
et/ou
les valeurs de pixel de pixels (12') appartenant au même groupe de pixels et à la même rangée de pixels (14) sont compressées au moins partiellement dans l'ordre prédéterminé (R) de la rangée de pixels (14) ;
et/ou
les valeurs de pixel des pixels (12') d'un groupe de pixels parmi la pluralité de groupes de pixels sont compressées avant les valeurs de pixel des pixels d'un autre groupe de pixels parmi la pluralité de groupes de pixels.

6. Procédé selon l'une des revendications précédentes,
dans lequel, pour une pluralité desdits au moins certains pixels (12'), l'étape respective d'association du pixel concerné (12') à un groupe de pixels parmi une pluralité de groupes de pixels est effectuée en commun avant d'effectuer, pour cette pluralité de pixels, l'étape respective de détermination d'une valeur de pixel estimée du pixel concerné (12') ; ou
l'étape d'association du pixel concerné (12') à un groupe de pixels parmi une pluralité de groupes de pixels est effectuée séparément pour chacun desdits au moins certains pixels ;
et/ou
la pluralité de rangées de pixels prédéterminées correspond exclusivement à des colonnes (14).

7. Procédé selon l'une des revendications précédentes,
dans lequel les valeurs différentielles (D1, D2, D3) sont codées selon un procédé de codage de Golomb-Rice ;
en particulier, une valeur différentielle (D) à coder est divisée par un paramètre de codage (k) afin de déterminer un quotient d'entiers (B) et un reste de division (A), le reste de division (A) étant représenté par un premier mot binaire et le quotient d'entiers (B) étant représenté par un deuxième mot binaire, le premier mot binaire et le deuxième mot binaire étant concaténés, sachant que, si une relation prédéterminée entre le quotient d'entiers et le paramètre de codage ne viole pas une condition limite prédéterminée, le mot binaire concaténé est concaténé avec un bit d'information de codage afin d'indiquer la fin du mot binaire concaténé, sinon le mot binaire concaténé n'est pas concaténé avec le bit d'information de codage.

8. Produit de programme informatique comprenant des instructions qui, lorsqu'elles sont exécutées par un ordinateur, amènent ce dernier à mettre en œuvre le procédé selon l'une des revendications précédentes.

9. Support de stockage lisible par ordinateur, comprenant des instructions qui, lorsqu'elles sont exécutées par un ordinateur, amènent ce dernier à mettre en œuvre le procédé selon l'une des revendications 1 à 7.

10. Dispositif comprenant un support de stockage lisible par ordinateur selon la revendication 9 et comprenant un moyen de calcul, le moyen de calcul étant adapté pour exécuter les instructions stockées sur le support de stockage.

11. Dispositif selon la revendication 10,
dans lequel le moyen de calcul comprend au moins un processeur graphique et/ou est connecté à au moins un processeur graphique ;
et/ou
le dispositif est conçu pour enregistrer une séquence temporelle d'images individuelles, en particulier, le dispositif étant une caméra à images animées, le moyen de calcul étant conçu pour compresser au moins une des images individuelles par le procédé selon l'une des revendications 1 à 7.
